# FASCICULE DE BREVET EUROPEEN

(11) **EP 0 537 607 B1**
(45) Date de publication et mention de la délivrance du brevet: **07.01.1998**
(21) Numéro de dépôt: 92117097.3
(22) Date de dépôt: 07.10.1992
(51) Int. Cl.: G06K 7/06, B60C 23/04

(54) **Implantation d'un circuit électrique dans un pneumatique**
Einbettung eines elektrischen Schaltkreises in einen Reifen
Implantation of an electric circuit in a pneumatic tire

(30) Priorité: 15.10.1991 FR 9112791
(43) Date de publication de la demande: 21.04.1993
(73) Titulaire: COMPAGNIE GENERALE DES ETABLISSEMENTS MICHELIN - MICHELIN & CIE, 63040 Clermont-Ferrand Cédex (FR)
(72) Inventeur: Myatt, David, Pompignat, F-63119 Chateaugay (FR)
(74) Mandataire: Bauvir, Jacques

(56) Documents cités:
- US-A- 4 031 508
- US-A- 4 240 061
- PATENT ABSTRACTS OF JAPAN vol. 6, no. 20 (M-110)5 Février 1982 & JP-A-56 138 009

## Description

La présente invention se rapporte à l'implantation d'un circuit électronique à l'intérieur de la structure d'un pneumatique, autorisant par exemple une méthode simple et économique pour son identification ou sa surveillance.

Un circuit intégré transpondeur implanté à l'intérieur d'un pneumatique pour son identification a déjà été décrit dans le brevet US 4 911 217. Ce brevet expose qu'il a déjà été proposé d'utiliser des transpondeurs d'identification implantés à l'intérieur des pneumatiques et couplés inductivement avec l'extérieur. Cela concerne plus particulièrement les pneumatiques pour poids lourd puisque le prix de revient que l'on pouvait prévoir pour des transpondeurs ainsi conçus était trop élevé pour envisager une application dans le domaine des pneumatiques pour véhicules de tourisme.

Le brevet US 4 911 217 décrit une méthode pour, à partir d'un circuit intégré, implanter des électrodes tout près d'une structure de renforcement métallique à l'intérieur d'un pneumatique pour poids lourd, dans le but d'opérer à partir d'un champ électrique oscillant plutôt qu'un champ magnétique comme on l'envisageait auparavant. De cette manière, l'antenne inductive coûteuse et gênante est éliminée, puisque on utilise un couplage capacitif entre l'appareil d'interrogation et le circuit intégré implanté à l'intérieur du pneumatique.

Cette solution a cependant un certain nombre d'inconvénients. Le premier de ces inconvénients est qu'elle requiert que le pneumatique soit pourvu d'une structure de renforcement métallique. Ce ne sera pas toujours le cas, et notamment l'invention telle qu'elle est décrite dans le brevet cité ne peut être appliquée dans un pneumatique dont tous les renforts seraient en textile.

Un autre problème réside dans le fait qu'il est difficile, dans les procédés industriels, d'implanter les électrodes avec grande précision géométrique lors de la fabrication du pneumatique. Or, d'après l'enseignement de ce brevet, "la différence d'espacement pour chacune des deux électrodes par rapport à un élément métallique de renforcement du pneumatique est une caractéristique essentielle de l'invention". Ceci s'avérera certainement difficile à garantir dans un environnement industriel lors de la fabrication du pneumatique, d'autant plus que l'implantation des électrodes se fait à un moment où la plupart des composants du pneumatique sont du caoutchouc cru, c'est-à-dire n'ayant pas une grande stabilité dimensionnelle, ni en général de bonnes caractéristiques mécaniques.

De plus, l'invention décrite nécessite des appareils d'identification en lecture et écriture, ou lecture seulement, qui sont techniquement complexes, tout autant complexes que dans le cas d'un couplage inductif. Les prix de revient pour ces appareils d'interrogation sont trop élevés pour en assurer une grande diffusion. Il est relativement facile de disposer des hautes tensions requises (mille volts crête à crête comme suggéré dans ledit brevet, probablement beaucoup plus pour des appareils d'interrogation autorisant la lecture et l'écriture), mais il est plus difficile de recevoir des signaux de bas niveau et de source à haute impédance tels que ceux transmis par le circuit transpondeur enfoui dans le pneumatique, à partir d'une antenne capacitive située à l'extérieur du pneumatique. Les difficultés sont encore plus considérables lorsqu'il faut opérer à l'intérieur d'environnements très bruités électriquement, tels que des usines de fabrication, ou un véhicule automobile.

Par la demande de brevet JP 73/057 302 on connaît aussi des élements en caoutchouc électroconducteurs disposés sur ou noyés dans la bande de roulement ou les flancs pour évacuer l'électricité statique.
Une autre utilisation du caractère conducteur de caoutchoucs est proposé par la demande JP-A-56/138009 qui propose de rapporter, sur la surface interne d'un pneu, un film en caoutchouc dont la résistance varie selon la pression interne du pneu.
Il est également connu, par le brevet FR 2 411 719, de réaliser des caoutchoucs ayant une bonne résistance mécanique à l'action de la tension électrique, pour les pneus équipant les véhicules utilisant l'énergie électrique pour se déplacer, comme des trains, des tramways ou des métros.

Jusqu'à présent, aucune utilisation des caractéristiques électriques des caoutchoucs n'a été faite pour conférer aux pneumatiques des fonctions électriques ou électroniques dans le problème de l'identification ou de la surveillance d'un pneumatique, en usage sur véhicule, ou au cours de sa fabrication.

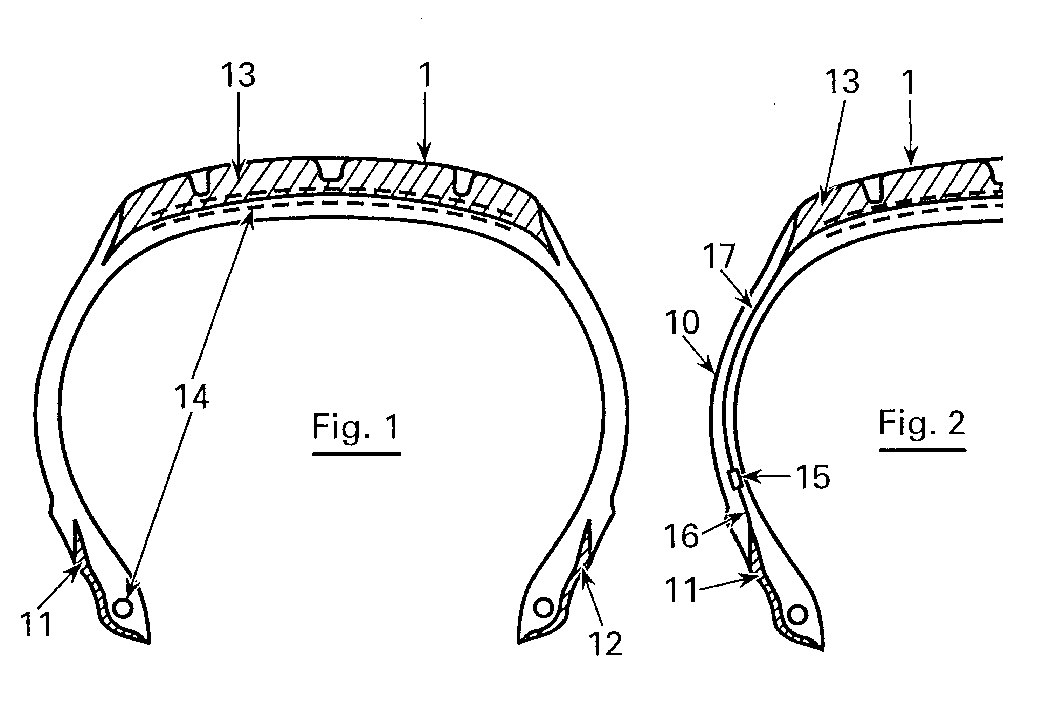

La conductivité électrique des compositions de caoutchouc utilisées dans la fabrication des pneumatiques est principalement due aux types et aux proportions de noir de carbone utilisés pour charger le caoutchouc. Un pneumatique est une structure très complexe, faisant notamment appel à différents types de composition de caoutchouc, qui lorsqu'ils sont assemblés et vulcanisés, confèrent un aspect assez uniforme au pneumatique. En réalité, les investigations du déposant l'ont conduit à observer des différences considérables de résistivité électrique selon les différents éléments en caoutchouc du pneumatique, même lorsque rien n'est fait volontairement pour influencer les propriétés électriques des pneumatiques, ce qui est généralement le cas. La figure 1 illustre les caractéristiques électriques valables pour la quasi-totalité des pneumatiques produits à l'heure actuelle. On aperçoit plusieurs zones dans lesquelles les compositions de caoutchouc sont conductrices d'électricité : il s'agit de la couche protectrice des bourrelets, appelés dans la suite "les protecteurs" 11 et 12, et de la bande de roulement 13.

Les protecteurs 11, 12 offrent une valeur de résistance électrique assez basse, en général inférieure à 10 000 Ohms, alors que la bande de roulement 13 a une résistance électrique de valeur typiquement inférieure à 500 000 Ohms. Pour tous les autres éléments en caoutchouc, la résistance électrique mesurée est considérablement plus élevée, de l'ordre de plusieurs MOhms (≥ 10⁶Ω).

On a constaté que la résistance éléctrique mesurée ne dépendait pratiquement pas de l'écart entre les électrodes de mesure, du moins au-delà d'un certain écart de l'ordre de quelques centimètres. Cela est probablement dû au fait que, tous les éléments en caoutchouc du pneumatique étant des pièces de révolution, la conduction électrique se fait par le chemin le plus court entre les deux électrodes, et aussi par le chemin le plus long, c'est-à-dire par deux chemins associés électriquement en parallèle. En outre, la résistance de contact électrique entre l'électrode et l'élément en caoutchouc a vraisemblablement une valeur non négligeable par rapport à la résistance interne de l'élément en caoutchouc, ce qui est encore un facteur d'égalisation des résistances mesurées, quels que soient les endroits entre lesquels on effectue la mesure. De plus, les éléments métalliques de renforcement du pneumatique, comme les nappes de sommet et les tringles 14, participent sans doute aussi à la conduction et sont encore un facteur d'égalisation.

L'invention met à profit les différences de conductibilité électrique des différents constituants en caoutchouc d'un pneumatique pour réaliser une liaison électrique avec un circuit intégré implanté à l'intérieur d'un pneumatique.

L'invention propose donc de réaliser une communication et une alimentation en énergie par contact galvanique avec un circuit intégré implanté à l'intérieur du pneumatique, et pour cela de réaliser des connexions électriques convenables entre ledit circuit intégré et les zones en caoutchouc électriquement conducteurs accessibles de l'extérieur du pneumatique. Les échanges d'énergie entre le circuit implanté dans le pneumatique et l'extérieur peuvent donc être assurés très simplement par contact électrique. Un circuit spécialisé peut être implanté à l'intérieur du pneumatique pour assurer son identification, et pour enregistrer des données utiles pour sa fabrication ou pour son utilisation ultérieure. L'enregistrement de paramètres, comme la pression de fonctionnement du pneumatique et/ou la température de fonctionnement du pneumatique, ou encore le nombre de rotations effectuées au cours de l'utilisation du pneumatique, peut être assuré. Il va de soi que les quantités d'énergie que l'on peut échanger par conduction électrique sont beaucoup plus élevées que ce qu'il est possible de faire en assurant des transmissions inductives ou surtout capacitives.

Le pneumatique selon l'invention a des éléments en caoutchouc conducteur de l'électricité distincts les uns des autres et accessibles de l'extérieur du pneumatique, et séparés par d'autres éléments en caoutchouc non conducteur ; il est équipé d'un circuit intégré noyé dans son épaisseur ; ledit circuit a au moins deux pôles électriques connectés galvaniquement, l'un et l'autre séparément, à des éléments distincts en caoutchouc conducteur de l'électricité, de sorte que, par contact d'une électrode au moins sur un desdits élément en caoutchouc conducteur connecté galvaniquement au circuit, un signal électrique puisse être transféré vers et/ou depuis ledit circuit électrique.

Pour l'utilisation de la présente invention, on entend par éléments en "caoutchouc conducteur" et "caoutchouc non conducteur", des éléments en caoutchouc qui, quelle que soit la valeur absolue de leur résistance électrique, aient des valeurs de résistance électrique séparées par au moins un ordre de grandeur.

Le circuit électrique implanté dans le pneumatique a un minimum de deux contacts, mais pourrait très bien en avoir plus selon le nombre de zones électriques conductrices séparées les unes des autres qui sont disponibles à la surface du pneumatique. L'implantation dans le pneumatique du circuit électrique peut être réalisée tout à fait au début de la fabrication du pneumatique, de sorte que le circuit électrique peut être utilisé pour identifier le pneumatique tout au long de la fabrication de celui-ci, ce qui peut être avantageux pour l'automatisation du procédé de fabrication. Il a été observé en effet que celles des compositions en caoutchouc qui sont conductrices de l'électricité après vulcanisation le sont aussi avant la vulcanisation, et de même pour les compositions en caoutchouc qui ne sont pas conductrices de l'électricité. Le dialogue avec le circuit implanté à l'intérieur du pneumatique peut donc être assuré par contact galvanique à tout moment de la fabrication du pneumatique, ce qui est un moyen simple, fiable et économique d'assurer l'identification.

La condition minimale pour que cette invention puisse être appliquée est que le pneumatique possède au moins deux éléments en caoutchouc conducteur de l'électricité, c'est-à-dire ayant une résistance électrique relativement basse, de préférence de l'ordre de quelques milliers d'Ohms, séparés par des éléments en caoutchouc non conducteur, ayant une résistance électrique aussi élevée que possible, en pratique une résistance électrique supérieure d'au moins un ordre de grandeur par rapport à la valeur précédemment citée. De plus, il convient que les caractéristiques de conductivité électriques ne soient pas altérées significativement par la chaleur, par l'usure, par le vieillissement, par les attaques chimiques, ce qui conduirait à empêcher le fonctionnement normal du circuit électronique implanté à l'intérieur du pneumatique.

Par ailleurs, les dispositifs de lecture ou lecture/écriture utilisés en conjonction avec l'invention peuvent être conçus de façon à avoir un contrôle automatique du gain, de façon à tolérer les plus grandes variations de résistivité des éléments de caoutchouc du pneumatique et une plus grande variation des résistances de contact.

Les conditions à respecter pour les circuits intégrés qu'il faut implanter dans le pneumatique sont essentiellement qu'ils doivent rester compatibles avec le fonctionnement du pneumatique, c'est-à-dire ne pas introduire des contraintes locales trop importantes qui pourraient être la cause d'amorces de fissures ou de ruptures. Il faut que ces circuits intégrés ne soient détruits ni par les contraintes mécaniques et thermiques dues à la fabrication du pneumatique, ni par les contraintes mécaniques et thermiques dues à l'utilisation du pneumatique. Il faut que la protection du circuit électrique soit chimiquement compatible avec la composition de caoutchouc qui l'entoure. Il faut encore qu'aucune diffusion de molécule vers le silicium ne vienne perturber le fonctionnement du circuit intégré. En bref, le circuit doit être petit, très robuste et hermétique. De plus, ce circuit doit avoir de préférence une impédance élevée pour qu'il puisse fonctionner avec des échanges d'énergie relativement faibles, facilitant les contacts électriques à l'intérieur du pneumatique, minimisant la dissipation thermique que devra assurer le caoutchouc dans lequel il est noyé et minimisant les temps de réponse du circuit et simplifiant son encapsulage.

La description suivante explique comment cette invention permet de réaliser une implantation simple de petits circuits électriques à l'intérieur des pneumatiques, quel que soit le type de renforcement utilisé, notamment pour la nappe de carcasse (renforcement métallique ou renforcement textile). Le dispositif de lecture/écriture peut être très simplifié par comparaison avec les systèmes utilisant une transmission par couplage inductif ou capacitif parce qu'il n'a pas à être capable de discerner des signaux de très bas niveau en réception, et, à l'émission, il met en jeu des énergies plus faibles.

Le circuit implanté à l'intérieur du pneumatique est aussi considérablement simplifié par rapport à ce qu'il devrait être si on utilise le couplage capacitif (on supprime l'antenne inductive de communication), ou si on utilise le couplage capacitif (les signaux reçus par le dispositif de lecture sont de niveau plus élevé, rendant superflues certaines procédures de discrimination par rapport au bruit, comme des détections d'erreurs de transmission).

L'invention est aussi illustrée au moyen d'un exemple utilisant seulement un contact électrique avec le pneumatique, et donc simplifiant grandement les connexions et simplifiant grandement la question de la lecture de pneumatiques jumelés montés sur un véhicule, ou bien encore permettant une application aisée à l'identification d'un pneumatique choisi dans une pile de pneumatiques, tels qu'ils sont stockés par exemple dans des usines de fabrication ou bien chez des négociants en pneumatiques. Dans toutes ces dernières applications, il est pratiquement impossible d'envisager une identification au moyen d'un système utilisant un couplage capacitif ou inductif, car dans ces cas là, on a constaté que l'on ne saura jamais avec certitude avec quel pneumatique le système est entré en communication.

La description est illustrée en faisant référence aux dessins suivants :

La figure 1 est une section d'un pneumatique montrant où sont les éléments en caoutchouc conducteur de l'électricité.

La figure 2 montre l'implantation d'un circuit électronique à l'intérieur d'un tel pneumatique.

La figure 3 montre comment on connecte un système d'identification à un pneumatique pour activer le circuit qu'il contient.

La figure 4 montre un circuit électrique équivalent à la configuration illustrée par la figure 3.

La figure 5 montre comment on peut implanter un circuit à trois pôles à l'intérieur du pneumatique.

La figure 6 montre comment un circuit implanté dans le pneumatique peut être activé au moyen d'une seule connexion à la zone bourrelet.

La figure 7 montre le circuit électrique équivalent à la configuration de la figure 6.

La figure 8 montre comment des pneus jumelés peuvent être identifiés.

La figure 9 montre comment un pneu dans une pile de stockage peut être identifié.

La figure 10 montre un circuit intégré avec un fil électrique de connexion, préparé spécifiquement pour appliquer l'invention.

La figure 11 montre comment on peut conditionner ces circuits intégrés.

Le circuit électronique 15 que l'on aperçoit à la figure 2 est connecté via les fils conducteurs 16 et 17 aux éléments en caoutchouc conducteur que l'on trouve dans les bourrelets, à savoir un protecteur 11 d'une part, et à la bande de roulement 13 d'autre part. Ces deux connexions peuvent être réalisées en fil d'acier laitonné à haute élasticité, ou bien en fibre de carbone, ou bien encore en élastomère traité spécifiquement pour avoir une bonne conductivité électrique. Il n'est pas nécessaire que les fils 16 et 17 comportent un isolant électrique puisqu'ils sont enfouis dans un flanc 10 en caoutchouc isolant. De préférence, les fils 16 et 17 pénètrent à l'intérieur du protecteur 11 et à l'intérieur de la bande de roulement 13 respectivement, sur plusieurs millimètres, voire plusieurs centimètres pour assurer un bon contact électrique. Au besoin, on incurve ces fils conducteurs dans le sens circonférentiel pour assurer un contact suffisant.

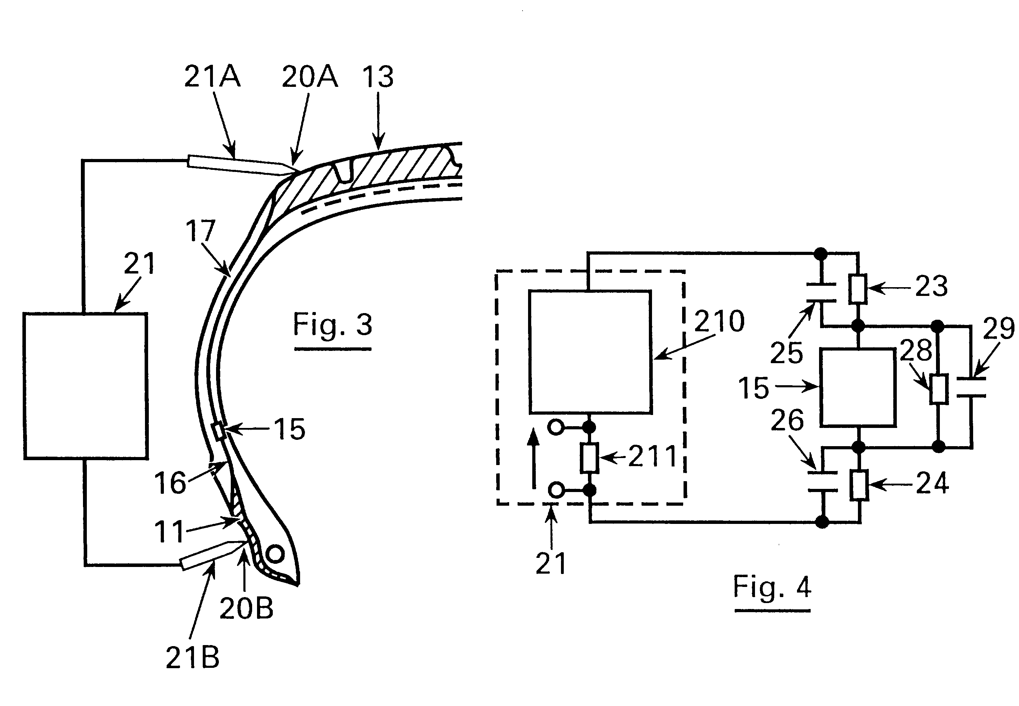

Les figures 3 et 4 illustrent l'une des formes les plus simples d'exécution de cette invention. A la figure 3, on aperçoit un appareil d'interrogation 21 destiné à communiquer avec le circuit intégré implanté à l'intérieur du pneumatique 1. Cet appareil 21 comporte des moyens permettant d'envoyer vers le pneumatique un signal électrique, de recevoir en réponse un signal électrique en fonction de la constitution ou de l'état électrique du circuit intégré, et il comporte deux électrodes 21A et 21B destinées à entrer en contact respectivement avec la bande de roulement 13 et avec le protecteur 11.

La figure 4 montre le circuit électrique équivalent pour cette utilisation. L'appareil d'inspection 21 comporte une source de courant ou de tension 210 et une impédance 211 permettant la détection d'une tension ou d'un courant modulé engendré par le circuit 15. Les éléments en caoutchouc conducteur de l'électricité sont représentés par l'association en parallèle d'un condensateur et d'une résistance : le condensateur 25 et la résistance 23 pour la bande de roulement et le condensateur 26 et la résistance 24 pour le protecteur. Le reste du pneumatique est représenté par une résistance 28 et un condensateur 29 branchés en parallèle sur le circuit électronique 15 implanté dans le pneumatique. Aussi longtemps qu'il y a une bonne isolation (résistance 28 élevée) entre les deux régions conductrices 23+25 et 24+26, le courant d'excitation peut être utilisé pour transférer de l'énergie au circuit 15 avec un bon rendement. Le circuit équivalent de la figure 4 montre que l'on a introduit des condensateurs pour tenir compte du comportement capacitif existant lorsque la source de courant 210 produit un signal alternatif.

Lors de l'utilisation de l'appareil d'identification, la liaison électrique est établie par deux électrodes 21A et 21B que l'on appuie sur les zones du pneumatique que l'on sait être constituées par du caoutchouc conducteur de l'électricité.

Il peut être considéré comme un inconvénient de devoir effectuer deux connexions électriques au pneumatique. Ceci est tout particulièrement vrai lorsque le pneumatique est monté sur le véhicule, ou bien lorsque la région du bourrelet est inaccessible, comme par exemple lorsque le pneumatique est stocké. Par contre, l'avantage de cette réalisation est que la lecture et l'écriture sont extrêment simples et fiables et que cela conduit à un circuit 15 et à un appareil d'inspection 21 extrêmement peu coûteux, permettant notamment une réalisation en courant continu.

On a constaté qu'il se peut que, pour continuer à utiliser l'invention avec des pneumatiques ayant subi un vieillisement important, il est préférable que l'électrode extérieure utilisée pour entrer en contact avec le pneumatique pénètre légèrement, pour franchir une couche très mince de caoutchouc qui peut devenir isolante au cours du vieillissement du pneumatique. Dès lors, il est souhaitable que la ou les électrodes utilisées 21A, 21B comportent une pointe effilée 20A, 20B. Grâce à cela, il est également possible de percer l'emballage éventuel du pneumatique pour effectuer une lecture.

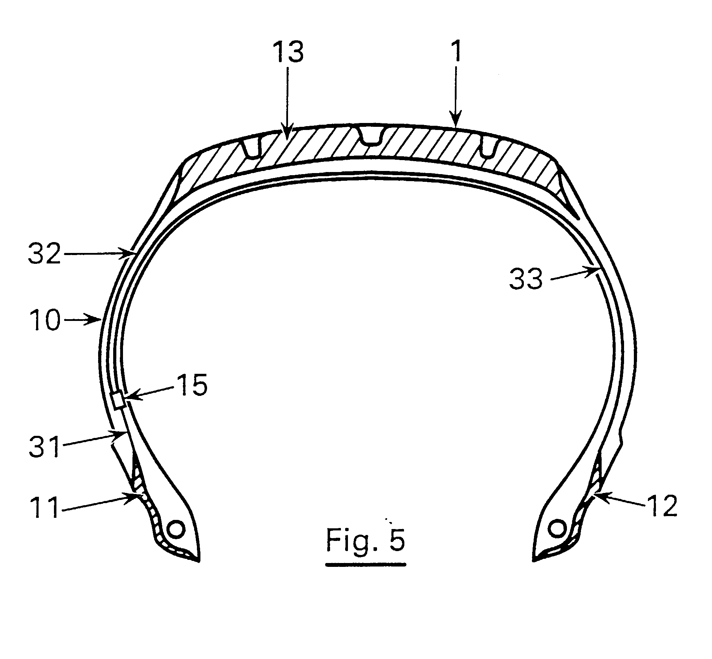

La figure 5 montre aussi une application qui peut être utilisée dans les pneumatiques tels qu'ils existent actuellement sans aucune modification à ceux-ci, quant à leur structure de renforcement ou la formulation des caoutchoucs. Le circuit 15 implanté à l'intérieur du pneumatique 1 comporte trois pôles dont l'un est connecté via le fil 32 à la bande de roulement 13, dont un autre est connecté via le fil 31 à l'un 11 des protecteurs de bourrelet et dont le troisième est connecté via le fil 33 à l'autre 12 des protecteurs. On peut par exemple utiliser les protecteurs 11, 12 pour transférer au circuit 15 des informations pendant la fabrication du pneumatique. Après la fabrication, pendant le service du pneumatique, ces deux zones risquent d'être mises en court-circuit par la jante, ou tout simplement d'être mal accessibles ou inaccessibles. Dans ce cas, seule la zone bande de roulement reste disponible pour communiquer avec le circuit 15.

Il est clair que, en acceptant de modifier la formulation des caoutchoucs spécifiquement pour utiliser cette invention, on peut ajouter par exemple sur les flancs des zones en caoutchouc conducteurs de l'électricité, séparées les unes des autres par des zones en caoutchouc non conducteur, pour multiplier le nombre de pôles utilisables pour communiquer avec le circuit 15, ou pour utiliser d'autres zones du pneumatique.

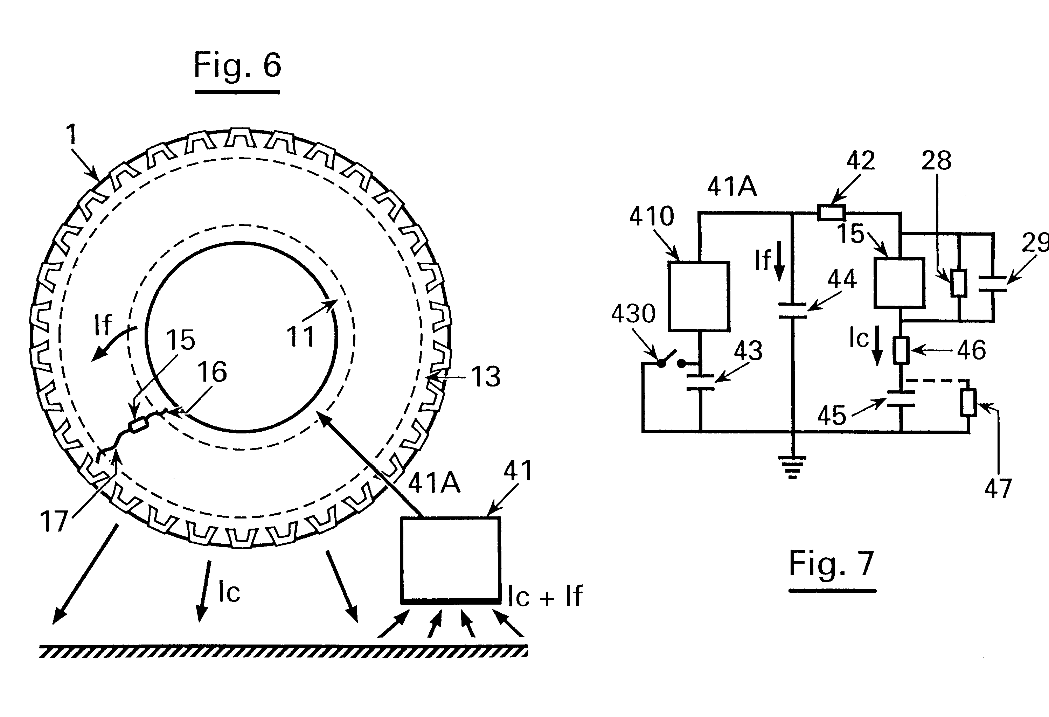

Les figures 6 et 7 illustrent une variante qui autorise le fonctionnement avec un seul contact galvanique avec le pneumatique 1 pour établir la liaison électrique. Cette variante convient tout particulièrement pour réaliser un appareil d'interrogation portatif 41 ne mobilisant qu'une seule main de l'opérateur pour réaliser le contact avec le pneumatique. En réalité, le second contact est remplacé par plusieurs couplages capacitifs en série : le couplage capacitif existant entre la seconde zone en caoutchouc conducteur de l'électricité (dans ce cas-ci la bande de roulement 13) avec le sol (ce couplage permet le passage du courant symbolisé par les flèches I_{c} sur la figure 6) et le couplage capacitif entre l'appareil d'interrogation 41 et le sol. Cette variante impose bien entendu d'utiliser dans l'appareil d'interrogation 41 une source de signal alternatif. A la figure 6, on aperçoit le circuit intégré 15 implanté dans le pneumatique 1, connecté via le fil conducteur 16 au protecteur 11, et connecté via le fil conducteur 17 à la bande de roulement 13. Le courant de fuite, symbolisé à la figure 6 par la flèche I_{F}, passe directement depuis le protecteur 11 à la masse. En pratique, on peut négliger le courant de fuite passant sur le flanc du pneumatique, c'est-à-dire le courant passant dans la branche 28 + 29 à la figure 7.

L'appareil d'interrogation 41 comporte une électrode 41A destinée à être mise en contact direct avec un protecteur. Il est par ailleurs en couplage capacitif avec la masse, couplage permettant le passage du courant I_{C} + I_{F}.

A la figure 7, on a tracé le schéma électrique équivalent à cette configuration. On aperçoit la source de courant ou de tension 410 et le condensateur équivalent 43 assurant le couplage capacitif de l'appareil portatif d'interrogation 41 avec la masse. Dans le cas d'un appareil fixe, celui-ci étant relié à la masse, ce condensateur 43 n'existera pas, ce qui est schématisé par l'interrupteur 430 en parallèle. On aperçoit aussi l'électrode 41A en couplage capacitif via la capacité parasite 44 avec le sol, et la résistance 42 correspondant à l'impédance du protecteur 11 de bourrelet. Cette résistance 42 est reliée électriquement à l'un des pôles du circuit électrique 15, lequel est relié à la masse via la branche comportant la résistance 46, correspondant à l'impédance de la bande de roulement 13, le condensateur 45 et la résistance 47. La résistance 47 varie selon la qualité du contact électrique du pneu 1 avec le sol. En parallèle du circuit intégré 15, on trouve encore comme dans l'exemple précédent une branche comportant une résistance 28 et un condensateur 29 en parallèle. Comme déjà dit, cette cause de fuite peut en pratique être négligée. Le courant I_{c} traversant le circuit 15 va être inférieur au courant délivré par la source 410, de par les fuites I_{F} passant par la branche comportant le condensateur 44. La source 41 doit donc fournir plus d'énergie pour pouvoir exciter le circuit intégré 15. Cependant, il est plus simple d'utiliser un seul contact entre l'appareil d'interrogation 41 et le pneumatique 1 pour pouvoir effectuer les transferts d'informations que l'on souhaite. Le choix de la fréquence d'excitation dépend des différents éléments décrits dans le modèle équivalent représenté à la figure 7. Il est suggéré qu'une fréquence optimale est comprise entre 50 kHz et 150 kHz.

Avec le même appareil d'inspection 41 et la même implantation du circuit 15, on pourrait aussi appliquer l'électrode 41B sur la bande de roulement 13. Le schéma électrique équivalent de cette utilisation est très semblable à celui décrit ci-dessus et il n'est pas nécessaire de l'approfondir davantage.

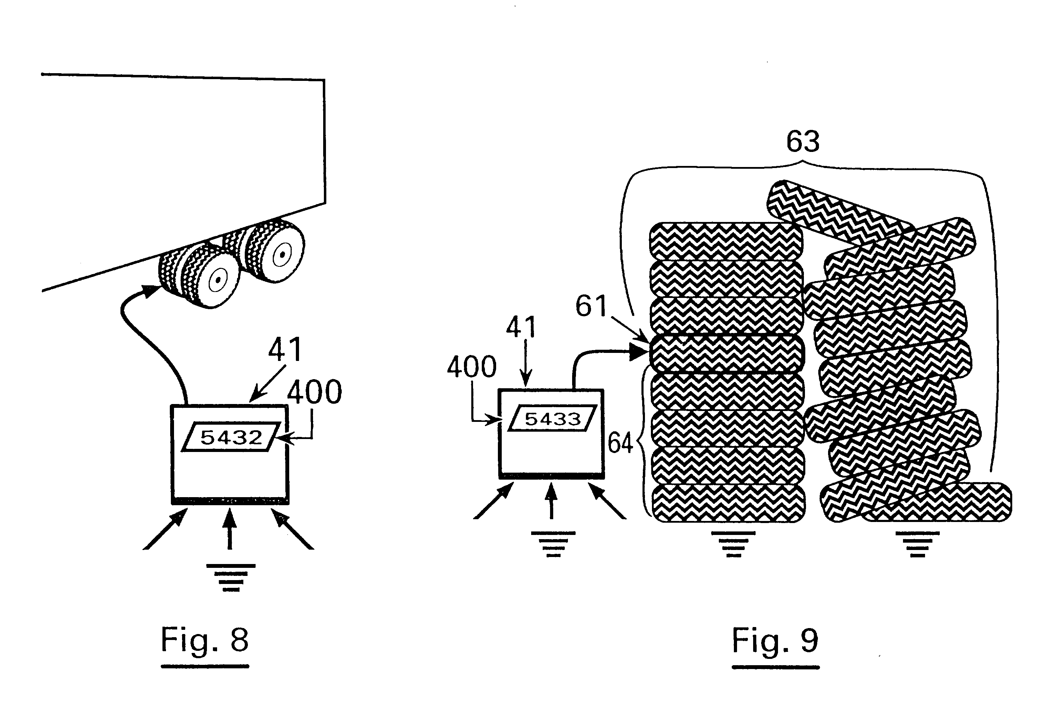

La figure 8 montre l'application de l'invention au repérage des pneumatiques montés en jumelé sur une remorque. L'appareil d'inspection utilisé 41 est toujours couplé capacitivement avec le sol d'une part, et d'autre part il entre en contact grâce à une électrode avec la bande de roulement du pneumatique choisi. Cet exemple s'apparente à celui décrit avec l'aide de la figure 6 : il en diffère en ce que le bouclage par couplage capacitif sera beaucoup plus grand grâce à un couplage élevé entre la roue et le sol, de par les masses métalliques de la remorque (facteur favorable) et en ce que le contact de la bande de roulement avec le sol va provoquer une fuite (facteur défavorable). Cependant, l'expérimentation montre que l'affichage 400 d'un numéro d'identification résidant dans le circuit intégré noyé dans le pneumatique inspecté reste toujours possible même lorsque l'ensemble du véhicule, le pneumatique et le sol sont détrempés, ce qui est le cas le plus pénalisant.

La figure 9 montre l'application de l'invention pour repérage des pneumatiques stockés en pile. Le contact direct se fait sur la bande de roulement du pneu 61. Dans ce cas, le bouclage par couplage capacitif est excellent grâce aux importantes masses capacitives des pneumatiques en 63 et 64, en couplage capacitif étroit avec les protecteurs du pneu 61. Là encore, l'affichage 400 d'un numéro d'identification stocké dans le pneumatique inspecté est toujours possible de manière très fiable.

Dans les deux derniers exemples d'application de l'invention, il est tout particulièrement difficile d'effectuer un transfert d'informations par couplage inductif, à cause des distances réduites disponibles (moins que le diamètre du pneu) et à cause de la nécessité d'avoir une relativement bonne correspondance entre l'orientation de l'antenne du transpondeur et l'antenne de l'appareillage de lecture. Il faut remarquer que la position du transpondeur dans le pneumatique sera en général inconnue. Finalement dans le cas d'application où les pneumatiques sont très proches l'un de l'autre, il y a une très forte probabilité que même si l'antenne de l'appareil de lecture est tout près d'un pneumatique, bien plus près qu'elle ne l'est des pneumatiques voisins, la communication soit établie malgré tout avec le circuit électronique implanté dans le pneumatique voisin, parce que le couplage inductif ou capacitif peut malgré tout être meilleur avec le pneumatique voisin.

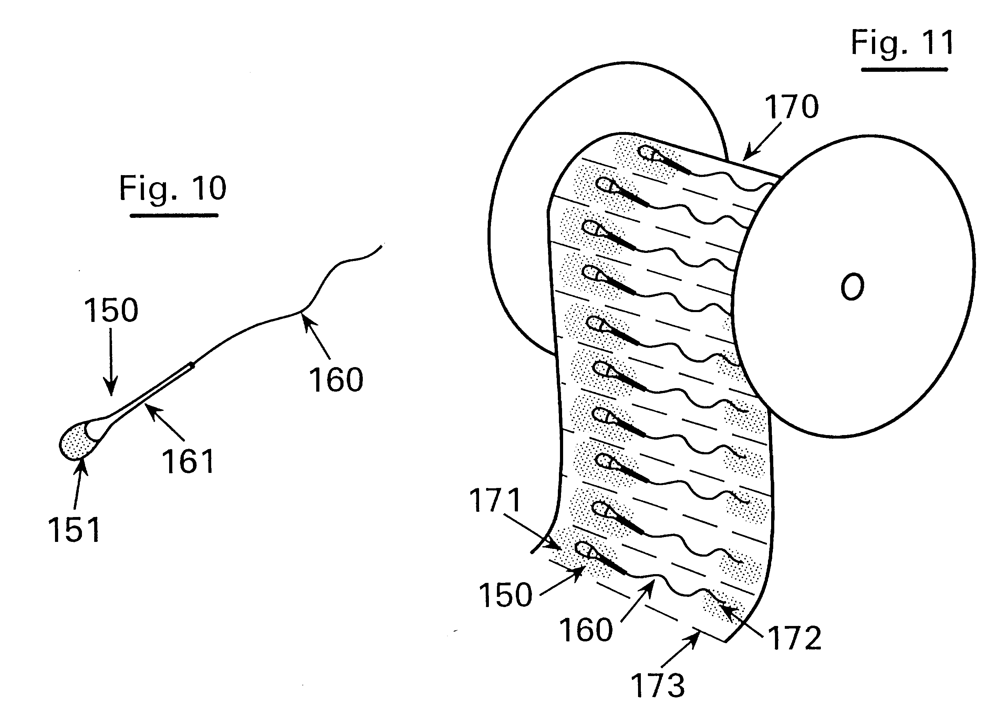

Bien entendu, de nombreuses variantes d'exécutions sont envisageables. Le circuit intégré qu'il faut enfouir dans le pneumatique peut être encapsulé dans un boîtier 150 (figure 10) dont la surface 151 est rendue conductrice par exemple par métallisation pour constituer l'un des pôles du circuit. Dans ce cas, on implante le circuit intégré dans l'un des éléments en caoutchouc conducteur. La ou les autres connexions électriques doivent être réalisées en fil électrique 160, isolé par un revêtement 161 adéquat, au moins lorsque le fil quitte le boîtier, sur une distance suffisante pour assurer l'isolation tant que le fil 160 est enfoui dans le même élément en caoutchouc conducteur.

La figure 11 illustre un conditionnement recevant le circuit de la figure 10, conçu pour que l'implantation du circuit dans les pneumatiques puisse être aisément réalisée dans les ateliers de fabrication. L'ensemble constitué par le boîtier 150 et le fil 160 de connexion est disposé sur une bandelette 173 en caoutchouc non conducteur. Le fil 160 est disposé de préférence en zigzag pour se prêter aux conformations ultérieures survenant dans la fabrication d'un pneumatique. Le tout est recouvert d'une pellicule de plastique, et les circuits ainsi préparés sont conditionnés en bobine 170, liés entre eux de façon à être facilement séparables. Lors de la fabrication du pneumatique, il suffit de prendre sur la bobine 170 le premier circuit disponible, d'arracher la pellicule protectrice en plastique, de poser l'ensemble sur le pneumatique en cours de fabrication de façon à ce que les extrémités 171 et 172 soient collées à hauteur des éléments respectifs avec lesquels on veut établir une connexion électrique. Ensuite, on recouvre le boîtier 150 par exemple par un protecteur, et l'extrémité opposée du fil 160 par exemple par la bande de roulement. Les opérations ultérieures de rouletage et de moulage assurent un contact électrique intime entre les éléments en caoutchouc conducteur et les éléments électriques ainsi noyés dans l'épaisseur du pneumatique.

## Revendications

1. Pneumatique (1) ayant des éléments (11,13) en caoutchouc conducteur de l'électricité distincts les uns des autres et accessibles de l'extérieur du pneumatique, et séparés par d'autres éléments en caoutchouc non conducteur, ledit pneumatique étant équipé d'un circuit intégré (15) noyé dans son épaisseur, ledit circuit (15) ayant au moins deux pôles électriques connectés, l'un et l'autre séparément, à des éléments distincts (11,13) en caoutchouc conducteur de l'électricité.

2. Pneumatique selon la revendication 1, caractérisé en ce que le circuit intégré (15) est connecté à un protecteur (11).

3. Pneumatique selon la revendication 1 ou 2, caractérisé en ce que le circuit intégré (15) est connecté à la bande de roulement (13).

4. Pneumatique selon la revendication 2, caractérisé en ce que le circuit intégré (15) est connecté à la bande de roulement (13) et, séparément, à chacun des protecteurs (11) et (12).

5. Pneumatique selon l'une des revendications 1 à 4,
caractérisé en ce que ledit circuit (15) est encapsulé dans un boîtier dont la surface est conductrice et constitue l'un des pôles du circuit, et en ce que ledit boîtier est implanté dans un des éléments en caoutchouc conducteur.

6. Appareil d'identification (21 ou 41) d'un pneumatique (1), comportant des moyens permettant d'envoyer vers le pneumatique un signal électrique, de recevoir en réponse un signal électrique en fonction de la constitution ou de l'état électrique d'un circuit intégré (15) noyé dans l'épaisseur du pneumatique, comportant en outre une électrode (21A, 21B ou 41A) au moins, destinée à assurer un contact galvanique direct avec un pneumatique.

7. Appareil d'identification selon la revendication 6, caractérisé en ce que ladite électrode comporte une pointe effilée (20A, 20B).

8. Procédé d'utilisation d'un appareil d'identification (21 ou 41) des pneumatiques (1) comportant des moyens permettant d'envoyer vers le pneumatique un signal électrique, de recevoir en réponse un signal électrique en fonction de la constitution ou de l'état électrique d'un circuit intégré (15) noyé dans l'épaisseur du pneumatique, caractérisé en ce que la liaison électrique entre le circuit intégré (15) et l'appareil d'identification (21 ou 41) est établie par au moins une électrode (21A, 21B ou 41A) dont on appuie l'extrémité sur la ou les zones extérieures (11,13) du pneumatique constituées par un caoutchouc conducteur de l'électricité.

9. Procédé selon la revendication 8, caractérisé en ce que l'on utilise une seule électrode.

10. Procédé selon l'une des revendications 8 ou 9,
caractérisé en ce que ladite zone est choisie dans le groupe constitué par les protecteurs (11, 12) et la bande de roulement (13).

## Patentansprüche

1. Reifen (1) , der voneinander unterschiedliche und von der Außenseite des Reifens her zugängliche Elemente (11, 13) aus elektrisch leitfähigem Gummi aufweist, die durch andere Elemente aus nicht-leitfähigem Gummi getrennt sind, wobei der genannte Reifen mit einer integrierten Schaltung (15) ausgestattet ist, die in seine Wand eingelassen ist, und die genannte Schaltung (15) mindestens zwei elektrische Pole aufweist, die voneinander getrennt mit unterschiedlichen Elementen (11, 13) aus elektrisch leitfähigem Gummi verbunden sind.

2. Reifen nach Anspruch 1, dadurch gekennzeichnet, daß die integrierte Schaltung (15) mit einem Protektor (11) verbunden ist.

3. Reifen nach Anspruch 1 oder 2, dadurch gekennzeichnet, daß die integrierte Schaltung (15) mit der Lauffläche (13) verbunden ist.

4. Reifen nach Anspruch 2, dadurch gekennzeichnet, daß die integrierte Schaltung (15) mit der Lauffläche (13) und gesondert mit jedem der Protektoren (11) und (12) verbunden ist.

5. Reifen nach einem der Ansprüche 1 bis 4, dadurch gekennzeichnet, daß die genannte Schaltung (15) in ein Gehäuse eingekapselt ist, dessen Oberfläche leitfähig ist und einen der Pole der Schaltung bildet, und daß das genannte Gehäuse in eines der leitfähigen Gummielemente eingesetzt ist.

6. Identifizierungsvorrichtung (21 oder 41) für einen Reifen (1), mit Mitteln, die es gestatten, an den Reifen ein elektrisches Signal abzugeben und als Antwort ein elektrisches Signal in Funktion von der Ausbildung oder dem elektrischen Zustand einer integrierten Schaltung (15) zu empfangen, die in die Wand des Reifens eingelassen ist, mit außerdem mindestens einer Elektrode (21A, 21B oder 41A), die dazu bestimmt ist, einen zuverlässigen galvanischen Kontakt unmittelbar mit dem Reifen herzustellen.

7. Identifizierungsvorrichtung nach Anspruch 6, dadurch gekennzeichnet, daß die genannte Elektrode eine schlanke Spitze (20A, 20B) aufweist.

8. Verfahren zur Benutzung einer Identifizierungsvorrichtung (21 oder 41) für Reifen (1), mit Mitteln, die es gestatten, an den Reifen ein elektrisches Signal abzugeben und als Antwort ein elektrisches Signal in Funktion von der Ausbildung oder dem elektrischen Zustand einer integrierten Schaltung (15) zu empfangen, die in die Wand des Reifens eingelassen ist, dadurch gekennzeichnet, daß die elektrische Verbindung zwischen der integrierten Schaltung (15) und der Identifizierungsvorrichtung (21 oder 41) durch mindestens eine Elektrode (21A, 21B oder 41A) hergestellt ist, deren Ende man gegen die Außenzone(n) (11, 13) des Reifens anlegt, die von einem elektrisch leitfähigen Gummi gebildet ist bzw. sind.

9. Verfahren nach Anspruch 6, dadurch gekennzeichnet, daß man eine einzige Elektrode benutzt.

10. Verfahren nach einem der Ansprüche 8 oder 9, dadurch gekennzeichnet, daß die genannte Zone aus der Gruppe ausgewählt wird, die von den Protektoren (11, 12) und der Lauffläche (13) gebildet ist.

## Claims

1. A tyre (1) having elements (11, 13) of electrically conductive rubber that are separate from one another and are accessible from the outside of the tyre, and separated by other elements of non-conductive rubber, said tyre being equipped with an integrated circuit (15) embedded in its thickness, said circuit (15) having at least two electric poles individually connected to separate elements (11, 13) of electrically conductive rubber.

2. A tyre according to Claim 1, characterised in that the integrated circuit (15) is connected to a cover (11).

3. A tyre according to Claim 1 or 2, characterised in that the integrated circuit (15) is connected to the tread (13).

4. A tyre according to Claim 2, characterised in that the integrated circuit (15) is connected to the tread (13) and, separately, to each of the covers (11) and (12).

5. A tyre according to one of Claims 1 to 4,
characterised in that said circuit (15) is encapsulated in a casing whose surface is conductive, and constitutes one of the poles of the circuit, and in that said casing is implanted in one of the conductive rubber elements.

6. An identification device (21 or 41) for a tyre (1), comprising means for sending an electrical signal to the tyre, for receiving as a response an electrical signal as a function of the composition or of the electrical state of an integrated circuit (15) embedded in the thickness of the tyre, furthermore comprising at least one electrode (21A, 21B or 41A), intended to ensure direct galvanic contact with a tyre.

7. An identification device according to Claim 6, characterised in that said electrode comprises a tapered point (20A, 20B).

8. A method for using an identification device (21 or 41) for the tyres (1) comprising means for sending an electrical signal to the tyre, for receiving as a response an electrical signal as a function of the composition or of the electrical state of an integrated circuit (15) embedded in the thickness of the tyre, characterised in that the electrical connection between the integrated circuit (15) and the identification device (21 or 41) is brought about by at least one electrode (21A, 21B or 41A), the end of which is pressed against the outer zone or zones (11, 13) of the tyre formed by an electrically conductive rubber.

9. A method according to Claim 8, characterised in that a single electrode is used.

10. A method according to one of Claims 8 or 9,
characterised in that said zone is selected from the group formed by the covers (11, 12) and the tread (13).
